(19) Europäisches Patentamt
European Patent Office
Office européen des brevets

(11) **EP 2 660 046 A1**

(12) **EUROPEAN PATENT APPLICATION**
published in accordance with Art. 153(4) EPC

(43) Date of publication:
**06.11.2013 Bulletin 2013/45**

(51) Int Cl.:
**B32B 27/00** (2006.01)   **B29C 51/10** (2006.01)
**B32B 27/32** (2006.01)   **B29K 23/00** (2006.01)
**B29L 9/00** (2006.01)

(21) Application number: **11853178.9**

(22) Date of filing: **26.12.2011**

(86) International application number:
**PCT/JP2011/080008**

(87) International publication number:
**WO 2012/090902 (05.07.2012 Gazette 2012/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2010 JP 2010292083**

(71) Applicant: **Idemitsu Unitech Co. Ltd.**
**Tokyo 108-0014 (JP)**

(72) Inventor: **KONDO Kaname**
**Sodegaura-shi**
**Chiba 299-0205 (JP)**

(74) Representative: **Skone James, Robert Edmund**
**Gill Jennings & Every LLP**
**The Broadgate Tower**
**20 Primrose Street**
**London EC2A 2ES (GB)**

(54) **TRANSPARENT MULTILAYER SHEET AND MOLDED PRODUCT THEREOF**

(57)    A transparent multilayer sheet of the embodiments includes a base layer and a surface layer laminated on at least one surface of the base layer. The base layer is formed of a resin composition that has a storage modulus being 2300 MPa or more at a temperature of 23 degrees C and at a frequency of 1 Hz while being 150 MPa or less at a temperature of 140 degrees C and at a frequency of 1 Hz and that has a crystallization speed of 1min$^{-1}$ or more.

**EP 2 660 046 A1**

**Description**

FIELD

Embodiments described herein relate to a transparent multilayer sheet and a molded product thereof, which is specifically used for applications such as a display in a vending machine and decoration of industrial materials.

BACKGROUND

When a crystalline resin typified by polypropylene is processed to form a film by a typical film formation method, the obtained film is opaque due to high crystallinity (e.g., a crystallinity degree, a crystallization speed, and a spherulite size) of the crystalline resin. In order to obtain a transparent film or sheet, there have been employed methods such as a method of creating a lot of fine crystals using a nucleating agent to suppress growth of spherulites and a rapid cooling method using a belt process.

Specifically, for instance, a method of producing a sheet formed of a composition containing homopolypropylene and a nucleating agent by a rapid cooling method using a belt process is proposed (see Patent Literature 1). Moreover, a sheet formed of a composition containing homopolypropylene, a petroleum resin and a dibenzylidene sorbitol derivative (a nucleating agent) is proposed (see Patent Literature 2). Furthermore, a multilayer sheet having three layers formed of three kinds of resin compositions including homopolypropylene, an ethylenepropylene copolymer and a nucleating agent is proposed (see Patent Literature 3).

CITATION LIST

PATENT LITERATURE(S)

Patent Literature 1: JP-A-6-254946
Patent Literature 2: JP-A-7-70385
Patent Literature 3: JP-A-7-308998

SUMMARY OF THE INVENTION

PROBLEMS TO BE SOLVED BY THE INVENTION

However, when a transparent polypropylene sheet produced by blending an additive (e.g., a nucleating agent) or a rapid cooling method by a belt process is subjected to vacuum molding that requires heating to a melting point or more, a fine structure of the sheet is often broken to generate a huge spherulite and lose transparency. Moreover, when a component having a softening point lower than that of polypropylene is added to the sheet in order to prevent loss of transparency of the sheet, a surface of the sheet becomes rough by being affected by the component having a low-temperature softening point although a whitening of the polypropylene sheet is reduced. Moreover, a molded product for a display in a vending machine, which has a relatively large and complex shape (e.g., a concavo-convex shape and a plastic bottle), requires an excellent vacuum moldability. However, it is difficult to simultaneously satisfy the vacuum moldability and transparency of the molded product.

In the sheet disclosed in Patent Literature 1, since a surface of the sheet becomes rough in vacuum molding, sufficient transparency of the molded product cannot be obtained. In the sheet disclosed in Patent Literature 2, a surface of the sheet becomes rough in vacuum molding to lower transparency, and additionally, a softening point in vacuum molding is so high that vacuum moldability becomes insufficient. For this reason, the sheet disclosed in Patent Literature 2 is not sufficient in terms of vacuum moldability and transparency of the molded product. Moreover, the sheet disclosed in Patent Literature 3 is not sufficient for vacuum moldability and transparency of the molded product. Further, in the sheet disclosed in Patent Literature 3, since an ethylenepropylene copolymer is used, heat resistance and rigidity become insufficient.

An object of the invention is to provide: a transparent multilayer sheet capable of producing a molded product having an excellent vacuum moldability and a high transparency obtained by sufficient prevention of whitening in molding; and a molded product of the transparent multilayer sheet.

MEANS FOR SOLVING THE PROBLEMS

In order to solve the above problem, according to an aspect of the invention, the following transparent multilayer sheet and molded product are provided.

Specifically, a transparent multilayer sheet according to an aspect of the invention includes a base layer and a surface layer laminated on at least one surface of the base layer. The base layer is formed of a resin composition that has a storage modulus being 2300 MPa or more at 23 degrees C and at a frequency of 1 Hz while being 150 MPa or less at 140 degrees C and at a frequency of 1 Hz and that has a crystallization speed of $1min^{-1}$ or more.

In the transparent multilayer sheet according to the above aspect of the invention, each of the base layer and the surface layer is preferably formed of a resin composition including a polypropylene polymer.

In the transparent multilayer sheet according to the above aspect of the invention, the base layer is preferably formed of a resin composition including: a polypropylene polymer of 79.5 mass% to 89.8 mass%; a petroleum resin of 10 mass% to 20 mass% having a softening point of 110 degrees C to 170 degrees C; and a nucleating agent of 0.2 mass% to 0.5 mass%.

In the transparent multilayer sheet according to the above aspect of the invention, a thickness ratio of the surface layer to the base layer (a total thickness of the surface layer/a thickness of the base layer) is preferably from 1/99 to 20/80, and the transparent multilayer sheet has a thickness of 150 μm to 700 μm.

The transparent multilayer sheet according to the above aspect of the invention preferably has a haze value of 10% or less.

A molded product according to another aspect of the invention is molded of the transparent multilayer sheet according to the above aspect of the invention.

The molded product according to the above aspect of the invention is preferably formed by vacuum molding.

The molded product according to the above aspect of the invention has a haze value of 15% or less.

The molded product according to the above aspect of the invention is preferably used for display in a vending machine.

According to the above aspect of the invention, a transparent multilayer sheet capable of producing a molded product having an excellent vacuum moldability and a high transparency obtained by sufficient prevention of whitening in molding, and a molded product formed of the transparent multilayer sheet are obtainable.

BRIEF DESCRIPTION OF DRAWINGS

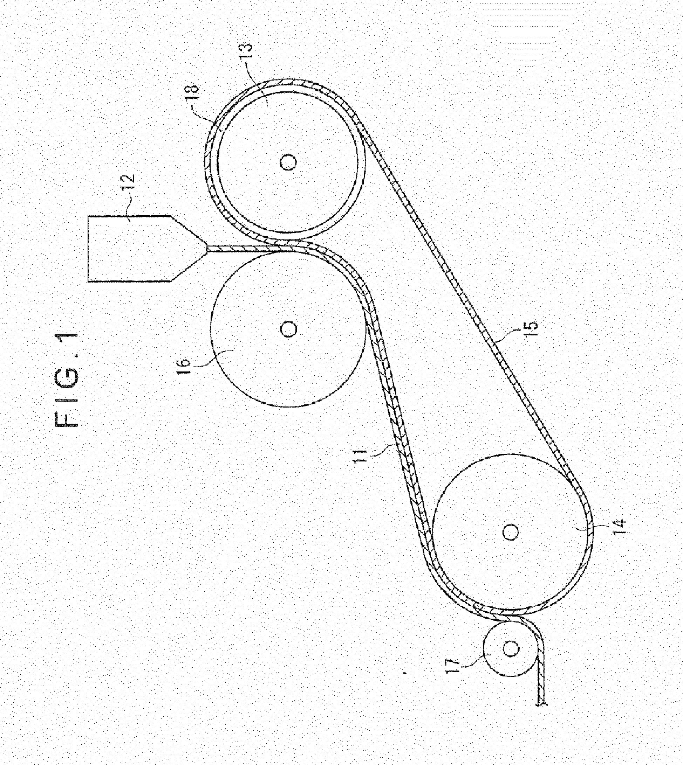

Fig. 1 is a schematic diagram showing an example of a manufacturing machine used for manufacturing a transparent multilayer sheet of the invention.

DESCRIPTION OF EMBODIMENT(S)

A suitable exemplary embodiment of the invention will be described below in detail.

Firstly, a transparent multilayer sheet according to the exemplary embodiment will be described.. Specifically, the transparent multilayer sheet according to the exemplary embodiment includes a base layer and a surface layer laminated on at least one surface of the base layer, in which the base layer is formed of a resin composition satisfying requirements described below.

The resin composition used for the base layer needs to have a storage modulus (G') being 2300 MPa or more at a temperature of 23 degrees C and at a frequency of 1 Hz while being 150 MPa or less at a temperature of 140 degrees C and at a frequency of 1 Hz.

Herein, the storage modulus (G') is a parameter as described below. Specifically, a viscoelastic body such as a resin composition has both viscosity and elasticity. In case of an ideal elastic body, stress and strain are observed in the same phase. On the other hand, in case of an ideal liquid, a phase of strain lags a phase of stress by 90 degrees. The viscoelastic body exhibits a behavior between those of the ideal elastic body and the ideal liquid, in which a value of a phase difference ranges between 0 degree and 90 degrees.

An elastic modulus is expressed by the following numerical formula (F1) as a complex modulus G* that is a complex number of a ratio between stress ($\sigma$*) and strain ($\gamma$*).

$$G^* = \sigma^*/\gamma^* = (\sigma_0/\gamma_0)e^{i\delta} = (\sigma_0/\gamma_0)(\cos\delta + i\sin\delta) \qquad (F1)$$

The complex modulus G* is divided into a real part and an imaginary part to provide the following numerical formula (F2).

$$G^*=G'+iG'' \qquad (F2)$$

In the numerical formula (F2), G' (real part) represents an elastic part of viscoelastic property and G" represents a viscous part thereof since G" is present in a phase lagging the elastic part by 90 degrees. G' is referred to as storage modulus and G" is referred to as loss elastic modulus. Contribution of elasticity and viscosity in a viscoelastic body can be evaluated by applying oscillatory deformation to a measurement sample and measuring an amplitude of strain, an amplitude of stress detected by a power meter and a phase difference between the strain and the stress.

In the exemplary embodiment of the invention, defining the storage modulus (G') within the above range can provide a transparent multilayer sheet having an excellent rigidity at the room temperature and a favorable moldability while keeping transparency in molding such as vacuum molding.

When the storage modulus (G') at a temperature of 23 degrees C and a frequency of 1 Hz is 2300 MPa or more, the sheet exhibits an excellent rigidity, so that a self-standing capability and a high strength of a fitting part to a fixing device, which are required for a large molded product (e.g., a display in a vending machine), can be simultaneously attained. In view of the above, the storage modulus (G') is more preferably 2400 MPa or more, particularly preferably 2600 MPa or more. The storage modulus (G') is measurable by a method described in the following Examples.

When the storage modulus (G') at a temperature of 140 degrees C and a frequency of 1 Hz is 150 MPa or less, the sheet is easily stretchable in vacuum molding, so that a favorable moldability in a temperature zone where whitening does not occur can be attained. In view of the above, the storage modulus (G') is more preferably 100 MPa or less, particularly preferably 90 MPa or less.

The resin composition used for the base layer requires crystallization speed of 1 min$^{-1}$ or more. The crystallization speed of 1 min$^{-1}$ or more can shorten a cooling time in vacuum molding, so that whitening caused by crystal growth occurring due to heat of a die can be prevented. This allows the sheet to have a high transparency. In terms of the above, the crystallization speed is more preferably 2.3 min$^{-1}$ or more. The crystallization speed is measurable by a method described in the following Examples.

The resin composition used for the base layer preferably satisfies the following requirements of a haze value of a manufactured transparent multilayer sheet. Specifically, the haze value of such a transparent multilayer sheet is preferably 10% or less, more preferably 8.5% or less. The haze value is measurable by a method described in the following Examples.

The resin composition used for the base layer is not particularly limited as long as satisfying the above requirements. The resin composition is exemplified by a resin composition including a polypropylene polymer, a petroleum resin and a nucleating agent.

Examples of the polypropylene polymer include homopolypropylene, polypropylene random copolymer and polypropylene block copolymer. Among these polypropylene polymers, homopolypropylene is preferable in terms of excellent heat resistance and rigidity. One of the polypropylene polymers may be singularly used, or a combination of two or more thereof may be used.

The polypropylene polymer preferably has tacticity (isotactic pentad fraction) of 0.92 or more. When the tacticity is less than the above lower limit, heat resistance and rigidity tend to be declined. The isotactic pentad fraction is measurable by a method described in the $^{13}$C-NMR method (Macromolecules, vol. 6,925, 1973) disclosed by A. Zambelli.

The polypropylene polymer preferably has a melt flow rate in a range of 0.5 g/10 min to 5 g/10 min. When the melt flow rate is less than the lower limit, a melt viscosity of the resin composition is increased, so that stretchability of the resin composition tends to be deteriorated. On the other hand, when the melt flow rate exceeds the upper limit, drawdown in molding tends to be increased to deteriorate moldability.

A content of the polypropylene polymer is preferably in a range of 79.5 mass% to 89.8 mass% in the resin composition used for the base layer.

The petroleum resin preferably has a softening point in a range of 110 degrees C to 170 degrees C. When the softening point is less than the lower limit, heat resistance is lowered and resin components tend to bleed out of the surface of the base layer under higher temperature atmosphere. On the other hand, when the softening point exceeds the upper limit, the softening point exceeds a melting point of the polypropylene polymer, so that a softening effect of the sheet is less likely to be given in a molding temperature region where a molded product is not whitened.

Examples of the petroleum resin include an aromatic petroleum resin, aliphatic petroleum resin, aromatic hydrocarbon resin-based petroleum resin, alicyclic saturated hydrocarbon resin-based petroleum resin and copolymer petroleum resin. Among these petroleum resins, in terms of transparency and moldability, a copolymer petroleum resin containing an aromatic component is preferable. Moreover, among these petroleum resins, in terms of transparency and moldability, a copolymer petroleum resin containing an aromatic component and dicyclopentadiene is further preferable. One of the petroleum resin may be singularly used, or a combination of two or more thereof may be used.

Although one of the petroleum resins may be singularly used, or a combination of two or more thereof may be used, a combined use of two or more thereof having different softening points is more preferable. In such a case, more preferably, to a petroleum resin having a softening point of 140 degrees C to 150 degrees C, a petroleum resin having a softening point lower than the above softening point by 20 degrees C to 30 degrees C is added so that a mass ratio between the petroleum resins (low softening point petroleum resin/ high softening point petroleum resin) falls in a range of 1/10 to 1/1. With this arrangement, a temperature range in which a favorable shape-reproduction in vacuum molding is obtainable is widened, whereby processability is further improvable.

The petroleum resin preferably has a number average molecular weight of 720 to 1085. When the number average molecular weight is less than the lower limit, heat resistance is lowered and resin components tend to bleed out of the surface of the base layer under higher temperature atmosphere. On the other hand, when the number average molecular weight exceeds the upper limit, the number average molecular weight exceeds a melting point of the polypropylene polymer, so that a softening effect of the sheet is less likely to be given in a molding temperature region where a molded product is not whitened.

A content of the petroleum resin is preferably in a range of 10 mass% to 20 mass% in the resin composition used for the base layer, more preferably in a range of 13 mass% to 16 mass%. When the content of the petroleum resin exceeds the upper limit, heat resistance of the molded product is lowered, so that the shape of the molded product tends to be difficult to keep under higher temperature atmosphere. On the other hand, when the content of the petroleum resin is equal to or less than the lower limit, softening of the sheet in the molding temperature region in which the molded product is not whitened becomes insufficient, so that vacuum moldability tends to be lowered.

In the resin composition for the base layer, the petroleum resin is preferably used within the above range in order to achieve the requirement that a storage modulus (G') is 2300 MPa or more at a temperature of 23 degrees C and at a frequency of 1 Hz while being 150 MPa or less at a temperature of 140 degrees C and at a frequency of 1 Hz.

Examples of the nucleating agent include metal carboxylate, metal phosphate, metal resinate, talc, mica and a sorbitol derivative. Among these, in terms of enhancement of transparency of the molded product, a sorbitol derivative is preferably used.

A content of the nucleating agent is preferably in a range of 0.2 mass% to 0.5 mass% in the resin composition used for the base layer, more preferably in a range of 0.25 mass% to 0.4 mass%, particularly preferably in a range of 0.3 mass% to 0.35 mass%. When the content of the nucleating agent is less than the lower limit, a crystallization speed of the resin composition is decreased, so that transparency of the molded product tends to be lowered. On the other hand, when the content of the nucleating agent exceeds the upper limit, the nucleating agent tends to bleed out and become sticky to cause an inferior appearance.

In the resin composition for the base layer, the nucleating agent is preferably used within the above range in order to achieve the requirement that the crystallization speed is 1min$^{-1}$ or more and in order to suppress stickiness and an inferior appearance of the obtained transparent multilayer sheet.

Various additives may be further added as needed to the resin composition used for the base layer. For instance, elastomer may be added to the resin composition used for the base layer since elastomer reduces cracks or burrs in cutting and molded-product punching. A pigment, antistatic agent, anti-fog additive, stabilizer, lubricant and the like may be further added to the resin composition used for the base layer.

The resin composition used for the base layer is not particularly limited, but are exemplified by a resin composition including a polypropylene polymer and a nucleating agent.

As the polypropylene polymer and the nucleating agent, the same polypropylene polymer and nucleating agent used in the resin composition used for the base layer are usable.

A content of the polypropylene polymer is preferably in a range of 99.5 mass% to 99.8 mass% in the resin composition used for the surface layer.

A content of the nucleating agent is preferably in a range of 0.2 mass% to 0.5 mass% in the resin composition used for the base layer. When the content of the nucleating agent is less than the lower limit, the crystallization speed of the resin composition is decreased, so that transparency of the surface of the molded product tends to be lowered. On the other hand, when the content of the nucleating agent exceeds the upper limit, the nucleating agent tends to bleed out and become sticky to cause an inferior appearance.

Various additives may be further added as needed to the resin composition used for the surface layer. For instance, a pigment, antistatic agent, anti-fog additive, stabilizer, lubricant and the like may be further added to the resin composition used for the base layer.

The transparent multilayer sheet according to the exemplary embodiment includes the base layer and the surface layer laminated on at least one surface of the base layer.

In such a transparent multilayer sheet, a thickness ratio of the surface layer to the base layer (a total thickness of the surface layer/a thickness of the base layer) is preferably from 1/99 to 20/80, more preferably from 5/95 to 15/85. When the thickness ratio is less than the lower limit, since heat resistance of the surface is decreased, surface roughness tends to be caused in molding and transparency of the molded product tends to be lowered. On the other hand, when the thickness ratio exceeds the upper limit, a softening temperature of the entire sheet is increased, so that it tends to be difficult to mold a product in the temperature range in which transparency of the molded product is maintainable.

The thickness of the transparent multilayer sheet is not particularly limited, but preferably in a range of 150 μm to 700 μm, more preferably of 400 μm to 600 μm. When the thickness is less than the lower limit, strength of the molded product tends to be difficult to attain. On the other hand, when the thickness exceeds the upper limit, it tends to difficult to form into a shape by vacuum molding and the like.

The transparent multilayer sheet may include an ink adhesion layer that is formed on at least a part of the surface layer. The ink adhesion layer can provide adhesiveness to the surface layer against ink.
A surface tension of such an ink adhesion layer is preferably 45 mN/m or more in terms of adhesiveness against ink.

The transparent multilayer sheet has an excellent vacuum moldability. Accordingly, the transparent multilayer sheet is preferably formed by vacuum molding. A method of molding the transparent multilayer sheet is not particularly limited.

Next, a method of manufacturing the transparent multilayer sheet will be described with reference to the attached drawings below. Specifically, an exemplary arrangement of a manufacturing apparatus of a transparent multilayer sheet 11 is shown in Fig. 1. The manufacturing method of the transparent multilayer sheet according to the exemplary embodiment using the manufacturing apparatus will be described. The sheet is manufacturable not only using the manufacturing apparatus shown in Fig. 1 but also various methods.

The manufacturing apparatus shown in Fig. 1 includes: a T-die 12 connected to a plurality of extruders, a first cooling roller 13, a second cooling roller 14, a metallic endless belt 15, a third cooling roller 16, and a fourth cooling roller 17. Using such a manufacturing apparatus, the transparent multilayer sheet and the molded product according to the exemplary embodiment are manufacturable, for instance, according to the following procedure.

The first cooling roller 13, the second cooling roller 14 and the third cooling roller 16 are thermally controlled so that a surface temperature of the endless belt 15 and the third cooling roller 16 which are in direct contact with the transparent multilayer sheet 11 is kept at a predetermined cooling temperature (e.g., from 20 degrees C to 140 degrees C).

Subsequently, the resin composition used for the surface layer and the resin composition used for the base layer are put into the respective extruders and co-extruded from the T-die 12. The transparent multilayer sheet 11 extruded from the T-die 12 is introduced between the first cooling roller 13 and the third cooling roller 16 in such a manner that the transparent multilayer sheet 11 substantially simultaneously contacts with the endless belt 15, which is in contact with the first cooling roller 13, and the third cooling roller 16.
A surface of the first cooling roller 13 is covered with an elastic material 18. The endless belt 15 and the third cooling roller 16 preferably have a mirror-finished surface with a surface roughness of 0.5 S or less.
Then, the transparent multilayer sheet 11 is put into pressure welding and is cooled to the crystallization temperature or less, using the first cooling roller 13 and the third cooling roller 16. Thus, pressure welding and cooling of the transparent multilayer sheet 11 can be conducted simultaneously, thereby enhancing transparency of the transparent multilayer sheet 11. At this time, the elastic material 18 is compressed by pressing force between the first cooling roller 13 and the third cooling roller 16 to be elastically deformed, so that the transparent multilayer sheet 11 is sheet-pressed by both the cooling rollers 13 and 16.
Subsequently, the transparent multilayer sheet 11 is obtainable by being taken out through the second cooling roller 14 and the fourth cooling roller 17.

When an ink adhesion layer is formed on a part of the surface layer of the transparent multilayer sheet 11 according to the exemplary embodiment, a method such as a gravure coating is usable.

Next, the molded product according to the exemplary embodiment will be described. Specifically, the molded product according to the exemplary embodiment is molded of the transparent multilayer sheet according to the exemplary embodiment.
Since the molded product is molded of the above-described transparent multilayer sheet according to the exemplary embodiment, the molded product has a high transparency obtained by sufficient prevention of whitening in molding. A haze value of such a molded product is preferably 15% or less, more preferably 13% or less.
Moreover, since the above-described transparent multilayer sheet according to the exemplary embodiment has an excellent vacuum moldability, the molded product can exhibit a high designing flexibility. Specifically, the molded product according to the exemplary embodiment is preferably usable as a molded product for a display in a vending machine.

A method of forming the molded product of the transparent multilayer sheet according to the exemplary embodiment is not particularly limited, however, molding methods such as vacuum molding, air pressure molding, vacuum pressure molding and press molding are usable.

Examples

Next, the invention will be described below in further detail with reference to Examples and Comparatives. However, it should be noted that the scope of the invention is by no means limited by these Examples and Comparatives. In each of Examples and Comparatives, properties of the resin composition (i.e., a storage modulus and a crystallization speed), properties of the sheet (i.e., a haze value, a total light transmissivity, and vacuum moldability), and properties of the molded product (i.e., a haze value, a total light transmissivity, and appearance) were obtained by the following methods.

(1) Storage Modulus

A storage modulus was measured using a viscoelastic spectrometer (manufactured by Seiko Instruments Inc. product name: EXSTAR DMS6100). Specifically, firstly, a sample having a 4.0-mm width and a 0.5-mm thickness was manufactured of the resin composition. A span-to-span distance was set at 20 mm. At a heatup rate of 2 degrees C/min and a frequency of 1 Hz, storage moduli of the sample were measured from 0 degree C to a melting point. From the obtained data, storage moduli at 23 degrees C and 140 degrees C were obtained.

(2) Crystallization Speed

A crystallization speed was measured using a differential scanning calorimeter (DSC) (manufactured by ParkinElmer Co., Ltd., product name: Diamond DSC). Specifically, firstly, a sample having a 5-g weight was manufactured of the resin composition. The sample was heated up from 50 degrees C to 230 degrees C at 80 degrees C/min, kept at 230 degrees C for five minutes, cooled down from 230 degrees C to 130 degrees C at 80 degrees C/min, and kept at 130 degrees C to perform crystallization. A measurement of a change in calories was started when the sample reached 130 degrees C, and a DSC curve was obtained.
From the obtained DSC curve, the crystallization speed was measured according to the following processes (i) to (iv).

(i) Collinear approximation of a change in calories from a tenfold time to a 20-fold time of duration from a start to a peak top in the measurement was defined as a base line.
(ii) An intersection at the peak between a tangent line on an inflection point and the base line was obtained and temperatures at a crystallization start and a crystallization finish were obtained.
(iii) Duration of time from the obtained crystallization start temperature to the peak top was measured as crystallization duration.
(iv) The crystallization speed was measured from a reciprocal number of the obtained crystallization duration.

(3) Haze Value

A haze value was measured in accordance with a method described in JIS (Japanese Industrial Standards) K7136. A haze value of the sample was measured using a haze meter (manufactured by NIPPON DENSHOKU INDUSTRIES CO., LTD, product name: NDH200).

(4) Total Light Transmissivity

A total light transmissivity was measured in accordance with a method described in JIS K7105. Specifically, a total light transmissivity of the sample was measured using a haze meter (manufactured by NIPPON DENSHOKU INDUSTRIES CO., LTD, product name: NDH200).

(5) Vacuum Moldability

Vacuum moldability of the sheet was evaluated by visually observing shape-reproduction of an edge on an outer circumference of the obtained molded product. A case of an excellent shape-reproduction of the edge was judged as "Good." Other cases were judged as "No Good."

(6) Appearance

Appearance of the obtained molded product was evaluated by visual observation. A case where neither surface roughness nor whitening was observed was judged as "Good." A case where whitening was observed was judged as "Whitened."

Examples 1 to 5 and Comparatives 1 to 3

Firstly, resin compositions were prepared in a form of pellets from the following polypropylene polymer, petroleum resin, nucleating agent and additive, according to  compositions shown in Tables 1 and 2. Among the obtained resin compositions, the resin compositions for the base layer were evaluated in terms of properties (storage modulus, crystallization speed). The obtained results are shown in Tables 1 and 2.

Polypropylene Polymer: homopolypropylene (manufactured by SunAllomer Ltd. product name: PL500A)
Petroleum Resin-1: a petroleum resin (softening point: 140 degrees C, number average molecular weight: 900, manufactured by Idemitsu Kosan Co., Ltd., product name: P-140)
Petroleum Resin-2: a petroleum resin (softening point: 125 degrees C, number average molecular weight: 820, manufactured by Idemitsu Kosan Co., Ltd., product name: P-125)
Nucleating Agent: a sorbitol derivative (sorbitol derivative master batch manufactured by RIKEN VITAMIN CO., LTD., product name: RIKEMASTER PN-10R)
Elastomer: a polystyrene-poly(ethylene/propylene)block-polystyrene copolymer (manufactured by KURARAY CO., LTD., product name: SEPTON 2004)
Blue Pigment: a blue pigment (manufactured by Dainichiseika Color & Chemicals Mfg. Co., Ltd., product name: PP-RM 10G787)

Next, the resin compositions in a form of pellets were prepared according to the compositions (unit: mass%) shown in Tables 1 and 2 and put into the extruders. It should be noted that a content of the blue pigment in the above composition was relative to 100 mass parts of the total amount of the resin composition. Using the manufacturing apparatus 1 shown in Fig. 1, the resin compositions were melt-extruded at a resin temperature of 240 degrees C to provide a sheet-shaped resin composition. The sheet-shaped resin composition was sandwiched between the endless belt 15 on the first cooling roller 13 and the third cooling roller 16 and was cooled under sheet-pressing at a speed of 2.5 m/min to provide a transparent multilayer sheet 11 having a sheet thickness of 500 mm. The obtained transparent multilayer sheet 11 has a three-layer structure of a surface layer / a base layer / a surface layer. A thickness and a thickness ratio (a total thickness of the surface layer / a thickness of the base layer) of the obtained transparent multilayer sheet 11 are shown in Tables 1 and 2.
Next, the obtained transparent multilayer sheet 11 was formed into a molded product for evaluation in a shape of a display can, using a vacuum molding machine (manufactured by Minos Co., Ltd., product name: FH-3M/H model veneer molding machine). Properties of the obtained multilayer sheet and the obtained molded product were evaluated. The obtained results are shown in Tables 1 and 2.

[Table 1]

| | | | Example 1 | Example 2 | Example 3 | Example 4 | Example 5 |
|---|---|---|---|---|---|---|---|
| Resin Composition | Surface Layer | Polypropylene Polymer | 99.7 | 99.7 | 99.7 | 99.7 | 99.7 |
| | | Nucleating Agent | 0.3 | 0.3 | 0.3 | 0.3 | 0.3 |
| | Base Layer | Polypropylene Polymer | 80.7 | 83.7 | 89.7 | 86.7 | 83.8 |
| | | Petroleum Resin -1 | 10.0 | 10.0 | 10.0 | 10.0 | 10.0 |
| | | Petroleum Resin -2 | 6.0 | 6.0 | — | 3.0 | 6.0 |
| | | Nucleating Agent | 0.3 | 0.3 | 0.3 | 0.3 | 0.2 |
| | | Elastomer | 3.0 | — | — | — | — |
| | | Blue Pigment | 0.001 | — | — | — | — |
| Properties of Base Layer Resin | Storage Modulus (23℃) [MPa] | | 2712 | 2697 | 2462 | 2751 | 3079 |
| | Storage Modulus (140℃) [MPa] | | 87 | 84 | 78 | 79 | 69 |
| | Crystallization Speed [min$^{-1}$] | | 3.01 | 2.44 | 3.10 | 2.99 | 2.72 |
| Properties of Sheet | thickness [$\mu$m] | | 500 | 500 | 500 | 500 | 500 |
| | Thickness Ratio (Surface Layer／Base Layer) | | 9/91 | 10/90 | 8/92 | 7/93 | 6/94 |
| | Haze Value [%] | | 6.0 | 8.1 | 6.9 | 6.2 | 8.3 |
| | Total Light Transmissivity [%] | | 87 | 88 | 89 | 90 | 88 |
| | Vacuum Moldability | | Good | Good | Good | Good | Good |
| Properties of Molded Product | Haze Value [%] | | 12.0 | 12.6 | 11.8 | 12.0 | 13.3 |
| | Total Light Transmissivity [%] | | 88 | 88 | 88 | 88 | 88 |
| | Appearance | | Good | Good | Good | Good | Good |

[Table 2]

| | | | Comp. 1 | Comp. 2 | Comp. 3 |
|---|---|---|---|---|---|
| Resin Composition | Surface Layer | Polypropylene Polymer | 100 | 99.7 | 99.7 |
| | | Nucleating Agent | — | 0.3 | 0.3 |
| | Base Layer | Polypropylene Polymer | 100 | 99.7 | 83.9 |
| | | Petroleum Resin −1 | — | — | 10 |
| | | Petroleum Resin −2 | — | — | 6 |
| | | Nucleating Agent | — | 0.3 | 0.1 |
| | | Elastomer | — | — | — |
| | | Blue Pigment | — | — | — |
| Properties of Base Layer Resin | | Storage Modulus (23°C) [MPa] | 1333 | 2048 | 3111 |
| | | Storage Modulus (140°C) [MPa] | 84 | 170 | 69 |
| | | Crystallization Speed [$min^{-1}$] | 0.06 | 5.08 | 0.80 |
| Properties of Sheet | | thickness [$\mu m$] | 500 | 500 | 500 |
| | | Thickness Ratio | — | — | 6/94 |
| | | Haze Value [%] | 36.4 | 6.7 | 11.6 |
| | | Total Light Transmissivity [%] | 90 | 89 | 90 |
| | | Vacuum Moldability | Good | Poor | Good |
| Properties of Molded Product | | Haze Value [%] | 56.4 | 13.9 | 25.5 |
| | | Total Light Transmissivity [%] | 88 | 86 | 89 |
| | | Appearance | Whitened | Good | Whitened |

Evaluation Results

The results of Tables 1 and 2 obviously show that a molded product having an excellent vacuum moldability and a high transparency obtained by sufficient prevention of whitening in molding is obtainable in the cases (Examples 1 to 5) satisfying all the requirements that the resin composition used for the base layer has a storage modulus being 2300 MPa or more at a temperature of 23 degrees C and a frequency of 1 Hz while being 150 MPa or less at a temperature of 140 degrees C and a frequency of 1 Hz and that a crystallization speed is 1 $min^{-1}$ or more.

INDUSTRIAL APPLICABILITY

A transparent multilayer of the invention is suitably used for applications such as a display in a vending machine and decoration of industrial materials.

EXPLANATION OF CODES

11: transparent multilayer sheet

Claims

1. A transparent multilayer sheet comprising: a base layer, and
a surface layer laminated on at least one surface of the base layer, wherein

the base layer is formed of a resin composition that has a storage modulus being 2300 MPa or more at a temperature of 23 degrees C and at a frequency of 1 Hz while being 150 MPa or less at a temperature of 140 degrees C and at a frequency of 1 Hz and that has a crystallization speed of 1min$^{-1}$ or more.

2. The transparent multilayer sheet according to claim 1, wherein
each of the base layer and the surface layer is formed of a resin composition comprising a polypropylene polymer.

3. The transparent multilayer sheet according to claim 1 or 2, wherein
the base layer is formed of a resin composition comprising: a polypropylene polymer of 79.5 mass% to 89.8 mass%; a petroleum resin of 10 mass% to 20 mass% having a softening point of 110 degrees C to 170 degrees C; and a nucleating agent of 0.2 mass% to 0.5 mass%.

4. The transparent multilayer sheet according to any one of claims 1 to 3, wherein
a thickness ratio of the surface layer to the base layer (a total thickness of the surface layer/a thickness of the base layer) is from 1/99 to 20/80, and
the transparent multilayer sheet has a thickness of 150 μm to 700 μm.

5. The transparent multilayer sheet according to any one of claims 1 to 4, wherein the transparent multilayer has a haze value of 10% or less.

6. A molded product that is molded of the transparent multilayer sheet according to any one of claims 1 to 5.

7. The molded product according to claim 6, wherein
the molded product is molded by vacuum molding.

8. The molded product according to claim 6 or 7, wherein the molded product has a haze value of 15% or less.

9. The molded product according to any one of claims 6 to 8, wherein
the molded product is used for display in a vending machine.

# FIG.1

EP 2 660 046 A1

**INTERNATIONAL SEARCH REPORT**

| International application No. |
| --- |
| PCT/JP2011/080008 |

**A. CLASSIFICATION OF SUBJECT MATTER**
*B32B27/00*(2006.01)i, *B29C51/10*(2006.01)i, *B32B27/32*(2006.01)i, *B29K23/00* (2006.01)n, *B29L9/00*(2006.01)n

According to International Patent Classification (IPC) or to both national classification and IPC

**B. FIELDS SEARCHED**

Minimum documentation searched (classification system followed by classification symbols)
B32B27/00, B29C51/10, B32B27/32, B29K23/00, B29L9/00

Documentation searched other than minimum documentation to the extent that such documents are included in the fields searched
Jitsuyo Shinan Koho          1922–1996     Jitsuyo Shinan Toroku Koho    1996–2012
Kokai Jitsuyo Shinan Koho    1971–2012     Toroku Jitsuyo Shinan Koho    1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 11-123797 A  (Tokuyama Corp.), 11 May 1999 (11.05.1999), claim 1; paragraphs [0001], [0035], [0045]; table 4 (Family: none) | 1-9 |
| Y | JP 06-254946 A  (Idemitsu Petrochemical Co., Ltd.), 13 September 1994 (13.09.1994), claim 1; paragraphs [0001], [0016]; examples 1 to 4; fig. 1 to 2 & US 5658514 A          & EP 614748 A1 & DE 69411609 C         & DE 69411609 D & AU 5529694 A          & ES 2121102 T & CA 2116389 A          & KR 10-0131055 B & AU 667607 B           & CA 2116389 A1 | 1-9 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 January, 2012 (11.01.12) | 24 January, 2012 (24.01.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**EP 2 660 046 A1**

**INTERNATIONAL SEARCH REPORT**

| International application No. |
|---|
| PCT/JP2011/080008 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-284942 A  (Grand Polymer Co., Ltd.),<br>03 October 2002 (03.10.2002),<br>claims 1, 3 to 4; paragraphs [0001], [0093]<br>(Family: none) | 1-9 |
| A | JP 11-129417 A  (Sumitomo Bakelite Co., Ltd.),<br>18 May 1999 (18.05.1999),<br>claim 1; paragraph [0001]; examples 1 to 5<br>(Family: none) | 1-9 |
| A | JP 07-186346 A  (Sumitomo Bakelite Co., Ltd.),<br>25 July 1995 (25.07.1995),<br>claim 1; paragraph [0001]; example 2; table 1<br>(Family: none) | 1-9 |

Form PCT/ISA/210 (continuation of second sheet) (July 2009)

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6254946 A
- JP 7070385 A
- JP 7308998 A

**Non-patent literature cited in the description**

- *Macromolecules,* 1973, vol. 6, 925